# EUROPEAN PATENT SPECIFICATION

(11) **EP 1 700 257 B1**
(45) Date of publication and mention of the grant of the patent: **08.02.2012**
(21) Application number: 04805981.0
(22) Date of filing: 10.12.2004
(51) Int. Cl.: G06M 1/04, G01F 15/07, G01F 3/08

(54) **A LIQUID FILLABLE COUNTER FOR A FLOW METER**
FLÜSSIG FÜLLBARER ZÄHLER FÜR EINEN STRÖMUNGSMESSER
COMPTEUR POUVANT ETRE REMPLI DE LIQUIDE POUR DEBITMETRE

(30) Priority: 12.12.2003 GB 0328882
(43) Date of publication of application: 13.09.2006
(73) Proprietor: Elster Metering Limited, Luton, Bedfordshire LU3 3AN (GB)
(72) Inventor: HOLMES-HIGGIN, Ian, Berkhamsted, Hertfordshire HP4 3DJ (GB); YOUNG, Ian, Luton, Bedfordshire LU2 7HZ (GB)
(74) Representative: Cozens, Paul Dennis
(86) International application number: PCT/GB2004/005161
(87) International publication number: WO 2005/057485

(56) References cited:
- EP-A- 0 212 000
- US-A- 3 067 612
- US-A- 3 389 857

## Description

### TECHNICAL FIELD

This invention relates to counters and is particularly applicable to liquid filled counters for flow meters and the like. However, it will be appreciated that the invention is not limited to this particular field of use.

### BACKGROUND ART

Flow meters are well known in the art. They typically employ counters which are operatively coupled to a rotary piston or other metering device and are enclosed in the flow meter's housing. The counters usually comprise a series of gearedly connected wheels having indicia on respective external faces to indicate the volume of fluid which has passed through the flow meter. The relevant indicia are visible through a window on the housing.

A problem associated with wheel counters in water meters is the formation of condensation on an inside face of the window. One method to counter this problem is to fill the counter with water prior to sealing the counter. However, when filling the counter it is often difficult to liberate all the air from within the counter housing. Also, to avoid contamination, the water in the counter housing must be kept separate from that flowing through the meter, and a seal is necessary. This may resist rotation around the drive shaft between the rotary piston and the counter wheels, degrading the sensitivity of the meter to low flow rates. US 3067612, for example, describes one such oil filled counter; in this example, the counter is oil filled in order to prevent fogging of the window, and thus improves the legibility of the counter. EP 0212000 describes a further such liquid filled counter.

US 3389857 discloses a motor driven score drum.

It is an object of a preferred embodiment of the present invention to ameliorate at least one of the problems associated with the prior art.

### SUMMARY OF THE INVENTION

According to a first aspect of the present invention there is provided a counter for a flow meter, the counter comprising a liquid fillable and sealable housing containing at least one rotatable counter wheel having at least one aperture arranged to allow gas bubbles in the housing to move away from the wheel when the housing is filled with liquid.

The invention has several advantages over the prior art. For example, in allowing gas bubbles to move away from the wheel, it is easier to liberate the counter of unwanted gas, such as air.

Preferably, the at least one aperture is offset from the wheel's centre.

Preferably, the wheel comprises at least two said apertures defining at least two spokes.

Preferably the counter comprises a drive means passing through the housing and operatively coupled to the at least one counter wheel for rotating the wheel. The drive means may comprise a shaft passing through an aperture in the housing.

Preferably, the counter comprises means for operatively coupling the counter to a rotary piston of a rotary piston flow meter.

Preferably, a lip seal sealingly engages the shaft to the aperture.

Preferably, the wheel comprises indicia visible from outside the housing. The indicia are typically numerical digits for indicating, for example, the volume of flow through the flow meter.

Preferably, the wheel comprises three said apertures defining three spokes and the counter comprises seven or eight said wheels.

The counter may comprise pressure compensation means in fluid communication with the housing. The pressure compensation means may comprise a compressible sac.

According to a second aspect of the invention there is provided use of a counter wheel in a liquid fillable and liquid sealable counter, the counter wheel comprising at least one aperture to permit the passage of gas bubbles through the wheel.

Preferably, the at least one aperture is offset from the wheel's centre.

According to a third aspect of the invention there is provided a liquid fillable counter comprising:
a liquid sealable housing;
at least one rotatable counter wheel mounted in the housing;
a connector for rotating the wheel, the connector passing through an aperture
   in the housing; and
a lip seal sealingly engaging the connector to the aperture.

We have found that the lip seal has an unexpected advantage in allowing easier rotational movement of the connector in the housing aperture. It also is more tolerant of radial displacement of the connector in the aperture.

Preferably, the connector includes a shaft passing through the aperture in the housing, and the lip seal sealingly engages the shaft to the housing aperture.

According to a fourth aspect of the invention there is provided a flow meter comprising a counter according to the first or third aspect of the invention.

According to another aspect of the invention there is provided a liquid fillable counter comprising:
a liquid sealable housing; and
at least one rotatable counter wheel mounted in the housing, wherein the wheel has at least one aperture offset from the wheel's centre.

The term "flow meter", as used herein in the description and claims, includes meters measuring by mass or by volume, and also meters measuring instantaneous flow rates or totalised flows ie the mass or volume of flow which has passed through the meter since it was last re-set.

### BRIEF DESCRIPTION OF THE FIGURES

Preferred embodiments of the invention will now be described, by way of example only, with reference to the accompanying drawings in which:
Figure 1 is a side elevation of a prior art flow meter which may be adapted to incorporate the counter and counter wheel of the present invention;
Figure 2 is a sectional side elevation of the flow meter of Figure 1, taken on line 2-2;
Figure 3A is a detail front elevation of a counter according to the present invention;
Figure 3B is a detail side elevation of a counter according to the present invention;
Figure 4 is a sectional front elevation of the counter illustrated in Figures 3A and 3B, taken on line 4-4 of Figure 3B;
Figures 5A, 5B and 5C are front and side elevations and a perspective view, respectively, of the counter wheel of the present invention;
Figure 6A is the elevation illustrated in Figure 4 with counter and drive wheels removed; and
Figure 6B is a detail view of Figure 6A.

### DETAILED DESCRIPTION OF THE PREFERRED EMBODIMENTS OF THE INVENTION

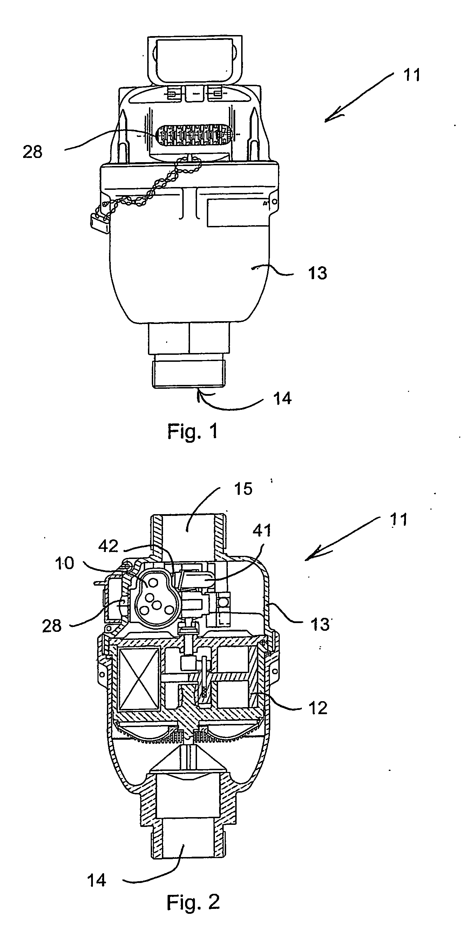

Referring to Figures 1 to 4, a preferred embodiment of the present invention is a counter 10 for use in a rotary piston flow meter 11, employed as utility meters, for example.

As is known in the art, rotary piston flow meters comprise a rotary piston 12 which displaces fluid by moving eccentrically around the inside of the meter casing 13 between inlet and outlet ports, 14 and 15 respectively. In alternative embodiments, the counter 10 may be adapted for use in other positive displacement flow meters, such as, but not being limited to, nutating disc meters. In further alternative embodiments, the counter 10 may be adapted for use in inferential flow meters, such as, but not being limited to, single-jet flow meters, multi-jet flow meters, bi-rotor flow meters, or helical-rotor meters such as that sold under our registered trademark HELIX.

The counter 10 comprises a liquid sealable and fillable housing 16. Seven counter wheels 17 are rotatably mounted in the housing on a connector in the form of a spindle 18, a portion of which passes through an aperture 19 in the housing 16. An eighth counter wheel 20 is fixedly mounted to a distal end 21 of the spindle 18. A proximal end 22 of the spindle is directly coupled to the rotary piston 12 of the flow meter 11 by a gear train, one element of which is shown at 25.

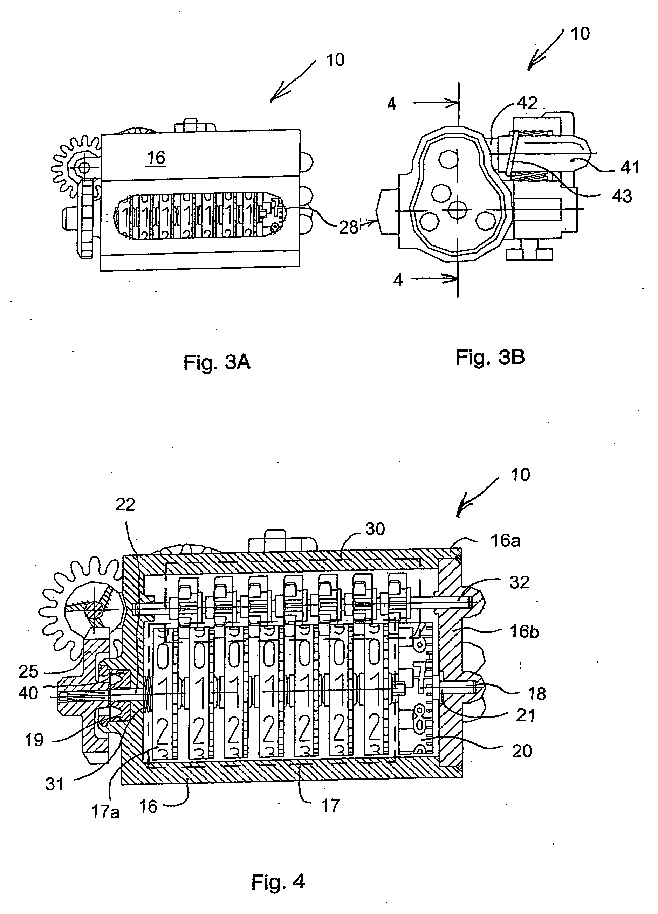

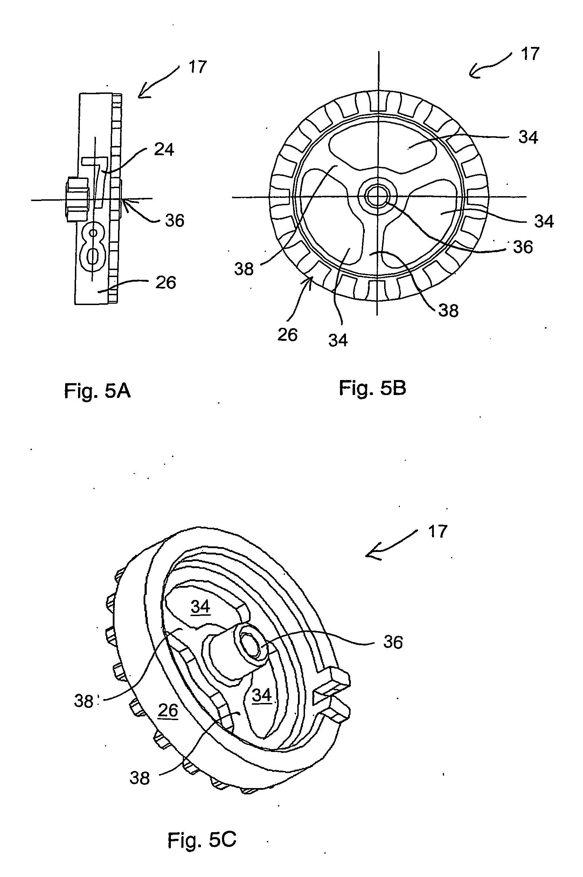

Referring to Figures 4, 5A, and 5C, each counter wheel 17, 20 has indicia in the form of ten integers 24 numbering from "0" to "9" on an outer presented face 26 of each wheel 17 and 20. The integers 24 denote the volume of flow which has passed through the flow meter 11, and are read through a window 28 on the housing 16, as illustrated in Figure 3A. Referring to Figure 4, drive wheels 30 are rotatably mounted to a drive wheel spindle 32 to form a second gear train gearedly connecting the counter wheels 17, 20 in series. Employing a configuration known in the art, the drive wheels 30 provide a step down ratio of 10:1 between adjacent counter wheels, starting from right-most counter wheel 20 and moving left through subsequent counter wheels 17. A resilient biasing means in the form of a helical spring 31 biases the left most counter wheel 17a toward the right most counter wheel 20 to maintain respective axial positions of the counter wheels 17, 20 and, indirectly, the drive wheels 30.

Referring to Figures 5B and 5C, each counter wheel 17, 20 comprises three apertures 34 offset from the wheel's centre 36 for allowing gas bubbles, such as air bubbles, to move away from the wheel when the housing 16 is filled with a counter liquid. The apertures 34 define three spokes 38. However, in alternative embodiments of the wheel 17, 20, there may be more or less offset apertures in each wheel, or the spokes may be of different shape, such as arcuate, for example. The counter liquid may be any liquid suitable to allow viewing of the integers 24 through the window 28 and to prevent build up of particulate or precipitate matter on the inside window face. One example of a suitable counter liquid is distilled water.

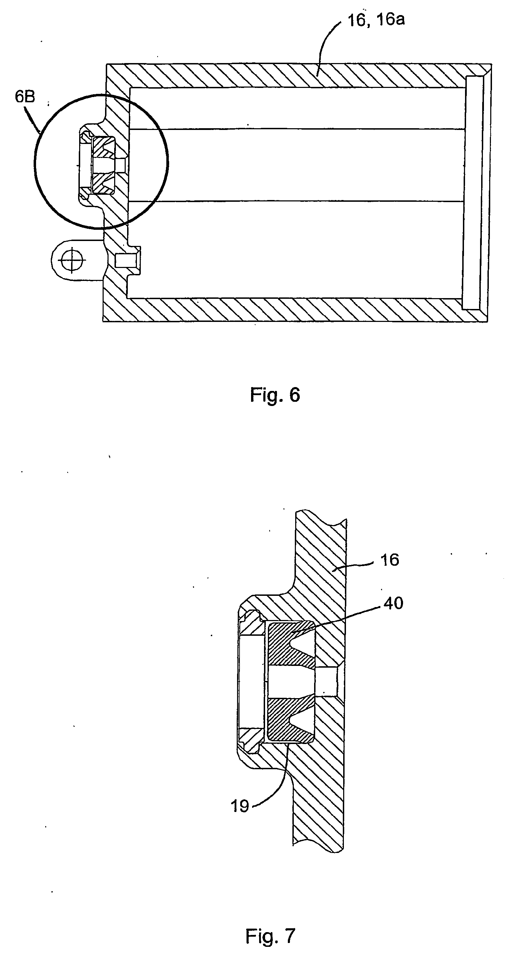

Referring to Figures 4, 6A and 6B, a lip seal o-ring 40 is provided between the housing aperture 19 and the spindle 18. The use of the lip seal o-ring 40 in this embodiment has the advantage that the spindle 18 is able to more freely rotate in the housing aperture 19 when compared with using a standard o-ring. This is useful in facilitating more accurate recording of fluid flow.

Because the counter is directly (mechanically) coupled to the rotary piston, the meter performance cannot be affected by external magnetic tampering. However, to achieve this, it is necessary that as illustrated in Figure 2, the counter 10 is positioned in the flow of the metered fluid, such as water for example.

To improve legibility of the indicia, the housing 16 is filled with liquid and sealed, so that condensation cannot form on an interior face of the window 28, and thus hamper legibility of the indicia. Sealing of the housing 16 also prevents ingress by the fluid being metered, thus ensuring unwanted particulate and precipitative matter (eg calcium) will not build up on the inside of the window 28. To achieve this purpose, the housing 16 comprises a main body 16a and a lid 16b. Prior to filling the counter housing 16 with liquid, the counter wheels 17, 20 and drive wheels 30 are inserted into the main body 16a of the counter housing 16 in an operational position. The orientation of the counter 10 during filling with liquid is such that the plane of each wheel 17, 20, 30 is substantially horizontal. Once filled with liquid, the main body 16a is moved about in a manner to at least substantially liberate the air from within the main body 16a. Once this has been achieved, the main body 16a is sealed with the lid 16b such that the liquid is retained within the counter housing 16.

In an alternative embodiment, the housing is filled via aperture 19 after the counter wheels 17, 20 and drive wheels 30 are inserted into the main body 16a and the lid 16b sealed thereon. Once filled with liquid, and the air within the housing 16 has been substantially liberated through the aperture 19 by movement of the housing 16, the housing 16 is sealed at aperture 19 by assembling the lip seal 40 on the spindle 18.

In some applications, relatively high pressure applied externally to the housing 16 by the fluid being metered may force the metered fluid into the housing 16 via the seal 40. To compensate for such pressure differences between the interior and exterior of the counter 10, a pressure compensation means in the form of a compressible pressure compensation sac 41, as illustrated in Figures 2 and 3B, is provided in fluid communication with the interior of the counter 10 via an inlet 42. The sac 41 is preferably rubber and preferably attachable to the inlet 42 by a biassed spring clip 43. The sac is compressed by the fluid being metered so that the pressure within the housing 16 closely equals that of the pressure within the meter casing 13.

As has been determined by the inventor, it is difficult to remove all air bubbles from the prior art counters, because at least some air bubbles would invariably collate and be trapped on an underside of at least some of the wheels during filling. In such cases, during later operation of the flow meter, the trapped air bubbles may then move from the wheels and be lodged on the interior window face of the counter, thus hampering legibility of the indicia through the window.

In the present invention, the presence of the apertures 34 allows the air to rise more easily out from the counter housing 16 during filling because the air can move from the counter 10 through the apertures 34. Therefore, removal of the air from the counter housing 16 during filling and prior to sealing with the lid 16b is markedly improved when compared to removal of air from prior art counters.

In another alternative embodiment, each counter wheel may comprise a centre aperture for allowing gas bubbles to move away from the wheel. In this embodiment, each wheel may be captively and rotatably held at its rim by two or more planetary drive wheels which are in turn gearedly coupled to an adjacent counter wheel. That is to say, the counter wheel of this embodiment does not require a central shaft for rotation thereon.

While the present invention has been described in its preferred embodiments, it is to be understood that the words which have been used are words of description rather than limitation and that changes may be made to the invention without departing from the scope as defined by the appended claims.

Each feature disclosed in this specification (which term includes the claims) and/or shown in the drawings may be incorporated in the invention independently of other disclosed and/or illustrated features.

The text of the abstract filed herewith is repeated here as part of the specification.

A counter for a flow meter is disclosed. The counter comprises a liquid fillable and sealable housing containing at least one rotatable counter wheel. The counter wheel has at least one and preferably three apertures for allowing gas bubbles in the housing to move away from the wheel when the housing is filled with liquid. The apertures are preferably offset from the wheel's centre.

## Claims

1. A counter for a flow meter, the counter (10) comprising a liquid fillable and sealable housing (16) containing at least one rotatable counter wheel (17), **characterised in that** said at least one wheel has at least one aperture (34) arranged to allow gas bubbles in the housing to move away from the wheel when the housing is filled with liquid.

2. The counter of claim 1 wherein the at least one aperture (34) is offset from the wheel's centre.

3. The counter of claim 1 or 2, the wheel (17) comprising at least two said apertures (34) defined by at least two spokes (38).

4. The counter of any of the preceding claims comprising a drive means passing through the housing (16) and operatively coupled to at least one counter wheel (17) for rotating the wheel.

5. The counter of claim 4 wherein the drive means comprises a shaft (32) passing through an aperture (19) in the housing.

6. The counter of claim 5 comprising a lip seal (40) sealingly engaging the shaft (18) to the aperture (19).

7. The counter of any preceding claim comprising means for operatively coupling the counter to a rotary piston (12) of a rotary piston flow meter (11).

8. The counter of any preceding claim wherein the wheel (17) comprises indicia visible from outside the housing (16).

9. The counter of any preceding claim, the wheel comprising three said apertures (34) defined by three spokes (38).

10. The counter of any preceding claim comprising pressure compensation means in fluid communication with the housing (16).

11. The counter of claim 10 wherein the pressure compensation means comprises a compressible sac (41).

12. A flow meter comprising a counter according to any one of claims 1 to 11.

## Patentansprüche

1. Eine Messuhr für einen Durchflussmesser (10) umfassend ein befüllbares und abdichtbares Gehäuse (16) mit wenigstens einem drehbaren Zählerrad (17), **dadurch gekennzeichnet, dass** das wenigstens eine Rad wenigstens eine Öffnung (34) hat, die so angeordnet ist, dass Gasblasen sich in dem Gehäuse von dem Rad wegbewegen können, wenn das Gehäuse mit Flüssigkeit gefüllt wird.

2. Die Messuhr gemäß Anspruch 1, wobei die wenigstens eine Öffnung (34) versetzt zur Mitte des Rads ist.

3. Die Messuhr nach einem der Ansprüche 1 oder 2, wobei das Rad (17) wenigstens zwei dieser Öffnungen (34) umfasst, die durch wenigstens zwei Speichen (38) definiert werden.

4. Die Messuhr nach einem der vorgehenden Ansprüche, umfassend einen Antrieb der das Gehäuse (16) durchgreift und operativ mit dem wenigstens einen Zählerrad (17) gekoppelt ist, um das Rad zu drehen.

5. Die Messuhr gemäß Anspruch 4, wobei der Antrieb einen Schaft (32) umfasst, der durch eine Öffnung (19) in dem Gehäuse hindurchtritt.

6. Die Messuhr gemäß Anspruch 5, umfassend eine Dichtlippe (40), die den Schaft (18) gegenüber der Öffnung (19) abdichtet.

7. Die Messuhr nach einem der vorgehenden Ansprüche, umfassend eine Vorrichtung um die Messuhr mit einem Drehkolben (12) eines Drehkolbendurchflussmessers (11) zu koppeln.

8. Die Messuhr nach einem der vorgehenden Ansprüche, wobei das Rad (17) Markierungen umfasst, die von der Außenseite des Gehäuses (16) sichtbar sind.

9. Die Messuhr nach einem der vorgehenden Ansprüche, wobei das Rad drei Öffnungen (34) umfasst, die durch drei Speichen (38) definiert sind.

10. Die Messuhr nach einem der vorgehenden Ansprüche, umfassend eine Druckausgleichsvorrichtung, die in Fluidkommuniukation mit dem Gehäuse (16) steht.

11. Die Messuhr nach Anspruch 10, wobei die Druckkompensationsvorrichtung einen zusammendrückbaren Beutel (41) umfasst.

12. Ein Durchflussmesser umfassend eine Messuhr nach einem der Ansprüche 1 bis 11.

## Revendications

1. Compteur pour un débitmètre, le compteur (10) comprenant un boîtier (16) pouvant être rempli de liquide et étanche contenant au moins une roue de compteur rotative (17), **caractérisé en ce que** ladite au moins une roue a au moins une ouverture (34) agencée pour permettre à des bulles de gaz dans le boîtier de s'éloigner de la roue lorsque le boîtier est rempli avec du liquide.

2. Compteur selon la revendication 1, dans lequel la au moins une ouverture (34) est décalée du centre de la roue.

3. Compteur selon la revendication 1 ou 2, dans lequel la roue (17) comprend au moins deux desdites ouvertures (34) définies par au moins deux rayons (38).

4. Compteur selon l'une quelconque des revendications précédentes, comprenant des moyens d'entraînement passant par le boîtier (16) et couplés de manière opérationnelle à au moins une roue de compteur (17) pour faire tourner la roue.

5. Compteur selon la revendication 4, dans lequel les moyens d'entraînement comprennent un arbre (32) passant par une ouverture (19) dans le boîtier.

6. Compteur selon la revendication 5, comprenant un joint d'étanchéité à lèvre (40) mettant en prise de manière étanche l'arbre (18) par rapport à l'ouverture (19).

7. Compteur selon l'une quelconque des revendications précédentes, comprenant des moyens pour coupler de manière opérationnelle le compteur à un piston rotatif (12) d'un débitmètre à piston rotatif (11).

8. Compteur selon l'une quelconque des revendications précédentes, dans lequel la roue (17) comprend des indices visibles depuis l'extérieur du boîtier (16).

9. Compteur selon l'une quelconque des revendications précédentes, dans lequel la roue comprend trois desdites ouvertures (34) définies par trois rayons (38).

10. Compteur selon l'une quelconque des revendications précédentes, comprenant des moyens de compensation de pression en communication de fluide avec le boîtier (16).

11. Compteur selon la revendication 10, dans lequel les moyens de compensation de pression comprennent un sac compressible (41).

12. Débitmètre comprenant un compteur selon l'une quelconque des revendications 1 à 11.
